# EUROPEAN PATENT APPLICATION

(11) **EP 4 776 104 A1**
(43) Date of publication of application: **15.07.2026**
(21) Application number: 25305035.5
(22) Date of filing: 14.01.2025
(51) Int. Cl.: G06F 3/01, G06T 19/00, H04N 7/15, G06F 111/02, G06F 111/18

(54) **METHOD TO MANAGE INTERACTIONS IN A MULTI-USER XR APPLICATION**

(71) Applicant: InterDigital CE Patent Holdings, SAS, 75017 Paris (FR)
(72) Inventor: LELIEVRE, Sylvain, 35760 MONTGERMONT (FR); HIRTZLIN, Patrice, 35830 BETTON (FR); JOUET, Pierrick, 35000 RENNES (FR); FAIVRE D'ARCIER, Etienne, 35750 SAINT GONLAY (FR); FONTAINE, Loic, 35530 NOYAL SUR VILAINE (FR); COVA REGATEIRO, João Pedro, 35220 CHATEAUBOURG (FR)
(74) Representative: Vossius & Partner Patentanwälte Rechtsanwälte mbB

(57) **Abstract**

Some embodiments of a method may include: obtaining a scene description file corresponding to a shared scene environment; parsing the scene description file into one or more data structures; identifying elements of the shared scene environment that describe user interactions; determining which elements are related to only one user and which elements are related to multiple users; tracking, for each element related to multiple users, events referenced by the respective user interaction; detecting satisfaction of a multi-user condition corresponding to occurrence of the respective event by one or more users; and responsive to detecting the satisfaction of the multi-user condition, executing an action related to the identified element of the shared scene environment.

## Description

### BACKGROUND

The present application is related to shared XR experiences.

### SUMMARY

An example method in accordance with some embodiments may include: obtaining a scene description file corresponding to a shared scene environment; parsing the scene description file into one or more data structures; identifying elements of the shared scene environment that describe user interactions; determining which elements are related to only one user and which elements are related to multiple users; tracking, for each element related to multiple users, events referenced by the respective user interaction; detecting satisfaction of a multi-user condition corresponding to occurrence of the respective event by one or more users; and responsive to detecting the satisfaction of the multi-user condition, executing an action related to the identified element of the shared scene environment.

Some embodiments of the example method may further include responsive to detecting the satisfaction of the multi-user condition, executing a second action related to the identified element of the shared scene environment.

Some embodiments of the example method may further include responsive to detecting the satisfaction of the multi-user condition, executing a second action related to a second element of the shared scene environment.

Some embodiments of the example method may further include responsive to detecting the satisfaction of the multi-user condition, executing an action related to a second element of the shared scene environment, wherein the second element is different than the element identified first.

Some embodiments of the example method may further include: detecting satisfaction of a second multi-user condition corresponding to the tracked event; and responsive to detecting the satisfaction of the second multi-user condition, executing the action related to the identified element of the shared scene environment.

For some embodiments of the example method, detecting satisfaction of the multi-user condition corresponding to the tracked event includes: detecting satisfaction of the multi-user condition by a first user; and detecting satisfaction of the multi-user condition by a second user.

For some embodiments of the example method, detecting satisfaction of the multi-user condition corresponding to the tracked event includes: detecting satisfaction of the multi-user condition by a first user; starting a timer; determining the timer is less than a timeout value; and responsive to determining the timer is less than the timeout value, detecting satisfaction of the multi-user condition by a second user.

Some embodiments of the example method may further include responsive to determining the timer is less than the timeout value, detecting a second time satisfaction of the multi-user condition by the first user.

For some embodiments of the example method, detecting satisfaction of the multi-user condition corresponding to the tracked event includes detecting satisfaction of the multi-user condition by at least N users, and N is a configurable number.

For some embodiments of the example method, detecting satisfaction of the multi-user condition corresponding to the tracked event includes detecting satisfaction of the multi-user condition by only N users, and N is a configurable number.

For some embodiments of the example method, detecting satisfaction of the multi-user condition corresponding to the tracked event includes detecting satisfaction of the multi-user condition by all users of a group of users.

For some embodiments of the example method, tracking the event includes obtaining user inputs from two or more users.

For some embodiments of the example method, the multi-user condition or the second multi-user condition are either a user input trigger or a visibility trigger.

For some embodiments of the example method, the scene description file complies with a Motion Picture Experts Group-Scene Description (MPEG-SD)-based specification.

An example apparatus in accordance with some embodiments may include: a processor; and a memory storing instructions operative, when executed by the processor, to cause the apparatus to perform the method of any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1A is a system diagram illustrating an example set of interfaces for a system according to some embodiments.
FIG. 1B is a system diagram illustrating an example set of interfaces for a scene description (stored as an item in gITF.json), three video tracks, an audio track, and a JSON patch update track in an ISOBMFF file according to some embodiments.
FIG. 1C is a system diagram illustrating an example set of interfaces for an MPEG-I node hierarchy supporting elements of scene interactivity according to some embodiments.
FIG. 1D is a schematic plan view illustrating example relationships of extended reality scene description objects according to some embodiments.
FIG. 2 is a schematic illustration showing an example virtual meeting according to some embodiments.
FIG. 3 is a process diagram illustrating an example processing of a scene description according to some embodiments.
FIG. 4 is a flowchart illustrating an example muti-user trigger processing according to some embodiments.
FIG. 5 is a flowchart illustrating an example process for handling multi-user triggers according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

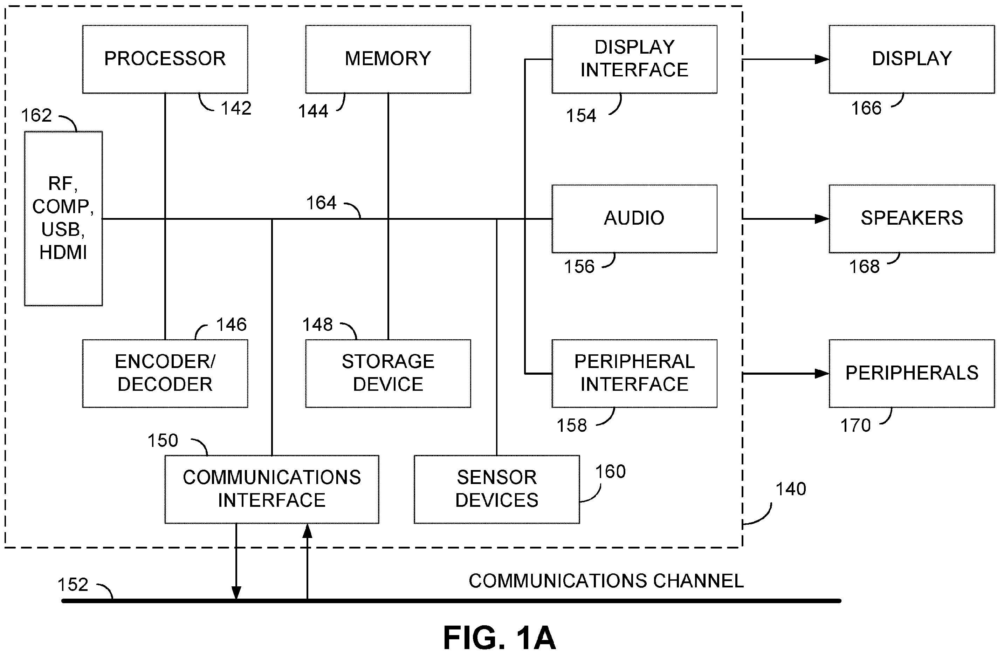

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

### Scene Description Framework for XR

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

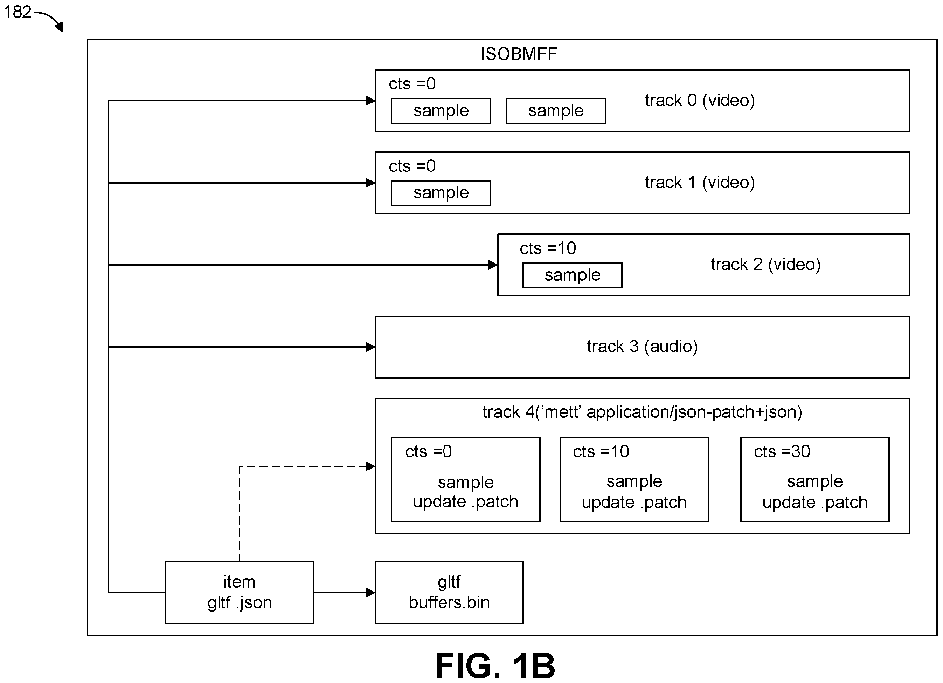

FIG. 1B is a system diagram illustrating an example set of interfaces for a scene description (stored as an item in gITF.json), three video tracks, an audio track, and a JSON patch update track in an ISOBMFF file 182 according to some embodiments.

### Runtime Interactivity

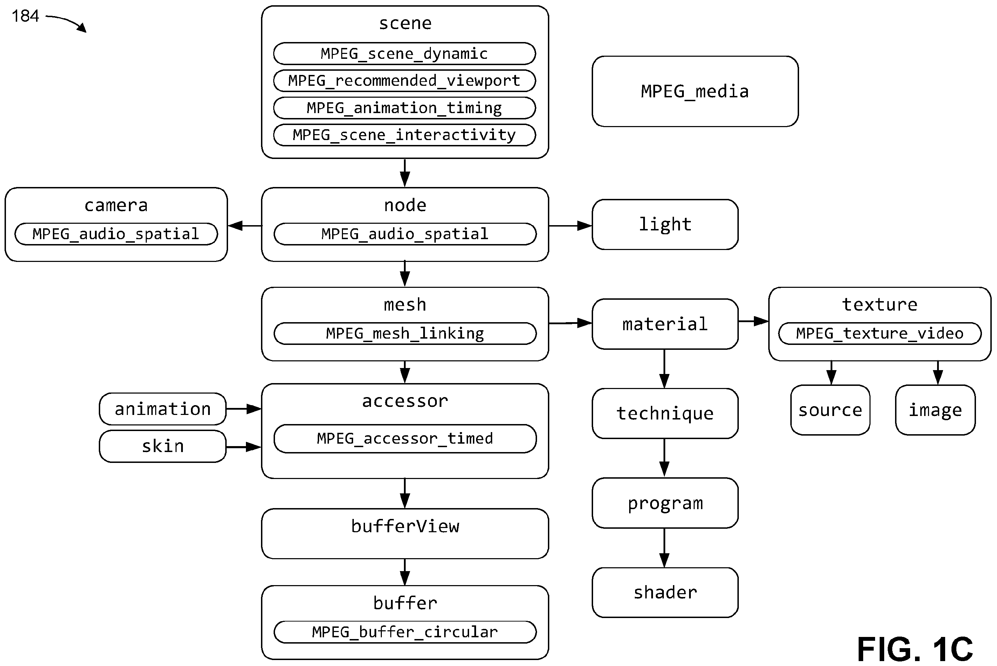

FIG. 1C is a system diagram illustrating an example set of interfaces for an MPEG-I node hierarchy 184 supporting elements of scene interactivity according to some embodiments.

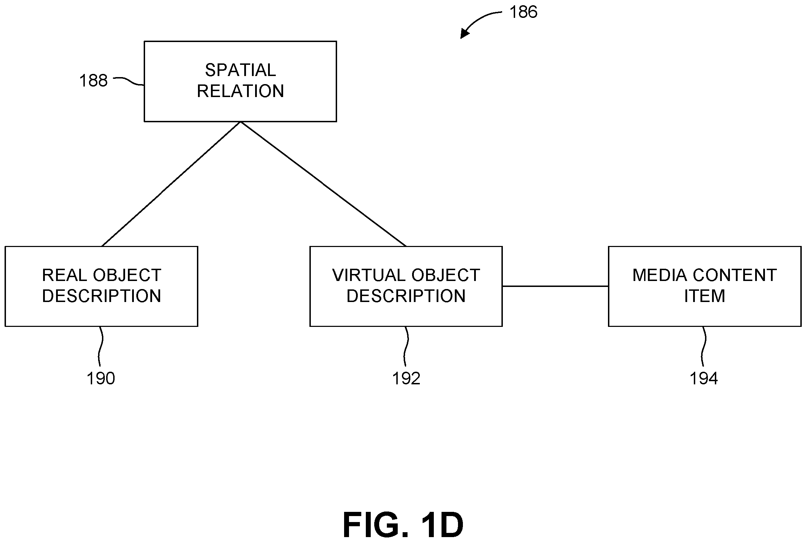

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 ("*MPEG Extension*")*.*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

In a shared extended reality (XR) experience (e.g., virtual conferencing, gaming), multiple users meet in a shared virtual environment. A scene description that describes all the objects that compose the virtual environment may need to include some elements related to the interaction between the users. This application discusses, for some embodiments, a method to manage user interactions in a shared environment, based on dedicated semantics in a scene description file.

This application discusses, for some embodiments, a shared XR experience in which multiple users are interacting in a virtual environment.

A typical example of an XR experience use case, e.g., a virtual conference extracted from a 3GPP technical report, is discussed. The application also explains how each user may interact in a virtual environment and explains how these interactions may be described in a scene description file.

### Virtual Conference Use Case

See draft standard *Study of Avatars in Real-Time* Communication *Services,* 3GPP, TR26.813, *available at:* portal<dot>3gpp<dot>org/desktopmodules/specifications/specificationdetails<dot>aspx? specificationid=4203 ("TR26.813") regarding a virtual conference use case.

User A is working in the engineering office. She wants to demonstrate her latest design for User B, who is working in the factory. She puts on her HMD and haptic gloves and logs in to her company's office in the metaverse using her credentials. After authentication, she is now in the virtual office space, and she rings User B, whose video appears on a virtual display.

User B sees User A's avatar on his phone's display. User A then asks him to join her in the virtual office to show him what she has been working on and to get his feedback. User B puts on his HMD and gloves and joins her.

Both User A and User B now see each other's avatar in the virtual office, where the avatars are seated facing each other across a table. User A loads her design from the virtual panel in front of her, and a 3D model of the design suddenly appears on the table. User B wants to take a closer look at the model, so he leans towards the model and picks up the model. He is now able to feel the surface of the model and inspect the model from different angles. He identifies an issue with one of the parts.

They contact Layla from another department for a third opinion. Layla specializes in this function. Layla is only able to join the call from her AR glasses and headphones, which are tethered to her phone. Layla joins their meeting, and her avatar appears to User A and User B in the virtual office. Layla is unable to see the complete virtual office. The avatars of User A and User B, along with the 3D model of User A's design, are overlayed on her glasses' display.

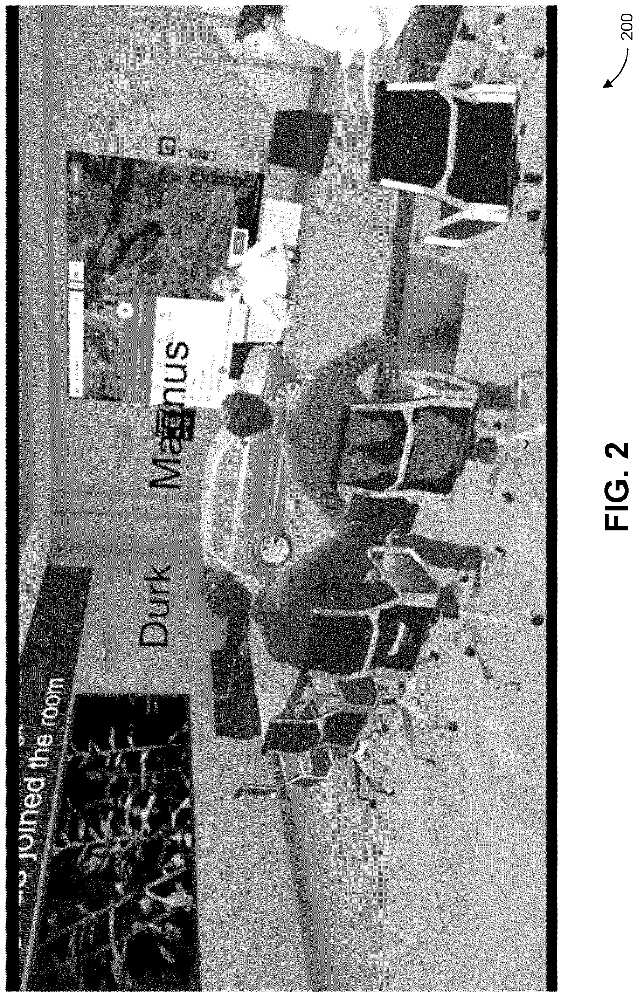

FIG. 2 is a schematic illustration showing an example virtual meeting according to some embodiments. FIG. 2 shows an illustration 200 of a virtual meeting.

### Users Interaction in Virtual Conference

For the interaction, gesture and expression from the users may be detected to launch actions, for instance, for the above use case. When all the users are looking at or are showing a given object (e.g., a TV frame in the virtual office), a video media is played on the TV. When one object (e.g., the 3D model of the design) is visible from several users, the object is animated. When all the users are looking at a given object (e.g., the 3D model of the design to analyze) or when several users are close to this object, the object is highlighted and/or the mesh of the object switch to a better LOD. When one of the users raises its hand, the 3D model of the design gets closer to him or his avatar.

More generally, for experiences where people meet in a shared virtual space, other interaction may be specified, such as: when a user is smiling, an animated virtual object may appear around the face of its avatar; when a user raises its hand, a sound is played to warn the other users; when all the users are close to each other, their voice are activated; and when one or more users are visible from a given camera, an alarm sound is played.

### Interaction in a Scene Description

Interactions in a virtual environment may be described in a gITF scene description file thanks to the interactivity extensions specified in MPEG-SD, ISO/IEC DIS 23090-14:2023/DAmd2:2023.

A behavior may be described that associates a set of triggers with a set of actions that are executed upon activation of the triggers.

Several trigger types are specified that determine a condition to be met to activate the trigger (input from a user, proximity between several objects of the scene, visibility of several objects from a given camera or collision between several objects).

Some parameters of a behavior allow the combination of the triggers through logical operations and the control of the activation of these combined triggers.

Table 1 gives an overview of the corresponding behavior semantics. "M" stands for mandatory and "O" for optional. A default value is given for optional parameters.

**Table 1.**

| **Name** | **Type** | **Usage** | **Default** | **Description** |
|---|---|---|---|---|
| triggers | array | M | | Indices of the triggers in the triggers array considered for this behavior |
| actions | array | M | | Indices of the actions in the actions array considered for this behavior. |
| triggersCombinationControl | string | M | | Set of logical operations to apply to the triggers (e.g. "#1&-#21(#3&#4)"). An empty string is understood as a logical OR between all the triggers. |
| triggersActivationControl | enumeration | M | | Indicates when the combination of the triggers shall be activated for launching the actions. |
| actionsControl | enumeration | M | | Defines the way to execute the defined actions: sequentially in the order of the actions array or in parallel. |
| ... | | | | |

This application may apply to MPEG-I scene descriptions for some embodiments. For the interaction phase of an XR experience, semantics are missing in the MPEG-SD specifications to declare events related to the activity of multiple users in a shared environment.

For some of the interaction examples listed above, Table 2 points out what is supported and what is not supported in the current specifications as understood. The features understood to be missing are highlighted in bold.

**Table 2.**

| **Scenario** | **Description** |
|---|---|
| When all the users are looking at or are showing a given object (e.g. a TV frame), a video media is played on the TV | USER_INPUT triggers (e.g. select, point at, look at a given node) may be described in the scene description, that is checked for each user. **But no way to express the fact that ALL the users (or a given number of user) must have activated this trigger before running the action.** |
| When all the users are looking at a given object (e.g. a 3D object to analyze), the object is highlighted and/or the mesh of the object switch to a better LOD | USER_INPUT triggers (e.g. look at a given node) may be described in the scene description, that is checked for each user. **But no way to express the fact that ALL the users (or a given number of user) must have activated this trigger before running the action.** |
| When several users are close to an object., the object is highlighted and/or the mesh of the object switch to a better LOD. | A PROXIMITY trigger can be used, if the users are represented in the scene graph, e.g. as avatar nodes. These nodes should be referenced in the *nodes* parameter of the trigger and the *referenceNode* references to object. |
| | But this trigger specifies that ALL nodes must be close to the referenced node to activate the trigger. The "one or more" is not supported. A solution is to specify a PROXIMITY trigger for each node and use the triggersCombinationControl parameter to combine them. |
| When one object is visible from several users, the object is animated. | The VISIBILITY trigger can be used with the object referenced in the *nodes* parameter. But this trigger specifies only one camera node. **Multiple "active"camera nodes should be specified, or an indication is missing that specifies multi-users features.** |
| When one or more users are visible from a given camera, an alarm sound is played | It can be described with the current VISIBILITY trigger. If the users are represented in the scene graph, e.g. as avatar nodes, they can be referenced in the *nodes* parameter of the trigger. But this trigger specifies that ALL nodes must be visible to activate the trigger. The "at least one node" is not supported. A solution is to specify a PROXIMITY trigger for each node and use the triggersCombinationControl parameter to combine them. |
| When one of the users raises its hand, the highlighted object gets closer to him or his avatar. | USER_INPUT triggers (e.g. body gesture input) may be described in the scene description, that is checked for each user. **But no way to express the fact that only one of the users activate this trigger once.** An "ACTION_TRANSFORM" or "ACTION_MANIPULATE" action may be used to describe the moving of the object, **assuming that the "transform"or "userInputDescription" parameter is** related **to the user raising its hand.** |
| When a user is smiling, an animated virtual object may appear around the face of its avatar. | USER_INPUT triggers (e.g. face expression input) may be described in the scene description, that is checked for each user. |
| | An "ACTION_ACTIVATE" action and an "ACTION_TRANSFORM" object may be used to describe the appearance of the object, assuming that the "transform" parameter is related to the user's smiling face. |

Parameters understood to be new may be used, in the scope of the MPEG-SD interactivity framework, that specify features related to multi-users interactivity. This application specifies a semantic for a scene description file that allows the device hosting the management of the shared scene (a Scene Manager function) to implement interactivity features involving multiple users sharing a virtual scene.

The "multi-users" type may be used for interactions, behaviors, or triggers that involve information from multiple users. The "mono-user" type may be used for interactions, behaviors, or triggers that involve information from only one user and that are processed individually for each user.

Parameters understood to be new are specified that modify the scope of the behaviors and triggers that are already specified in MPEG-SD and that are currently related to one user. Such parameters may be used with triggers that are related to inputs from users (the USER_INPUT trigger) and visibility from several users (the VISIBILITY trigger).

These parameters are described in the scope of MPEG-SD, but they may be specified in any other scene description language.

For some embodiments, parameters at the trigger level may modify the scope of a trigger for all behavior objects that reference the trigger. These parameters allow both types of triggers to be combined in a behavior object but prevent the same trigger from being used in different scopes.

For some embodiments, parameters at the behavior level may modify the scope of all triggers referenced in the behavior object. These parameters allow the same trigger to be used in different scopes but prevent both types of triggers from being combined.

### Semantics for a Scene Level Trigger

Table 3 gives the trigger level semantics of a multi-user trigger object as specified in MPEG-SD specification. The "multiUsers" parameter allows the content creator to specify interactions that involve multiple users. The details of this parameter are given in Table 4.

Table 3 gives the semantics of a trigger object, with the "multiUsers" parameters. This semantic allows the mixing of multi-user and single-user (mono-user) interactions in the same behavior.

**Table 3.**

| **Name** | **Type** | **Usage** | **Default** | **Description** |
|---|---|---|---|---|
| type | enumeration | M | | One element that defines the type of the trigger. |
| multiUsers | object | O | N/A | Additional parameters to address a trigger involving multiple users. See table 4 for the details of this object. |
| ... | | | | |
| if (type == TRIGGER_USER_INPUT){ | | | | |
| userlnputDescription | string | M | | Describes the user body part and gesture related to the input. The format shall follow the OpenXR input path description as defined in section 6 of *The OpenXR Specification,* KHRONOS, *available at:* registry<dot>khronos<dot>org/OpenX R/specs/1<dot>0/html/xrspec<dot> html. |
| | | | | An example string is: "/user/hand/left/grip". |
| nodes | array | O | N/A | Indices of the nodes in the nodes array to be considered for this user input. |
| } | | | | |
| ... | | | | |

Table 4 lists example trigger-level semantics of a multi-user object (the multiUsers parameter, which is mentioned in Table 3).

**Table 4.**

| **Name** | **Type** | **Usage** | **Default** | **Description** |
|---|---|---|---|---|
| multi Condition | enumeration | O | ALL | If equal to "ALL", the trigger's condition must be met by all users. |
| | | | | If equal to "ONLYN", the trigger's condition must be met by exactly N users. |
| | | | | If equal to "ATLEASTN", the trigger's condition must be met by at least N users. |
| duration | number | O | 2 | Give a time duration, in second. |
| | | | | After the trigger condition is met by a first user, it specifies a time window during which the *multiCondition* must be met. The *multiCondition* must be met during all the time window. Alternatively, the *multiCondition* must be met at least once during the time window. |
| | | | | In a first variant, during this time window, when the trigger condition has been met a first time for a user, it is still met for this user without any further check until the end of the window. |
| | | | | In a second variant, the condition for each user is checked during the whole time window. |
| number | number | O | 1 | Give the number of users when condition is ONLYN or ATLEASTN. |

For some embodiments, the multiUsers parameter may be specified for only some given trigger types, assuming that not all the trigger types are relevant with multi-user. Table 5 shows multi-users semantics at the trigger type level.

**Table 5.**

| **Name** | **Type** | **Usage** | **Default** | **Description** |
|---|---|---|---|---|
| type | enumeration | M | | One element that defines the type of the trigger. |
| | | | | |
| ... | | | | |
| if (type==TRIGGERVISIBILITY){ | | | | |
| cameraNode | number | M | | Index to the node containing a camera in the nodes array for which the visibilities are determined. |
| | | | | The visibility trigger shall be evaluated only if the related camera is active. |
| nodes | array | M | | Indices of the nodes in the nodes array to be considered. All the nodes shall be visible by the camera to activate the trigger. |
| multiUsers | object | O | N/A | Additional parameters to address a trigger involving multiple users. See Table 4 for the details of this object. |
| } | | | | |
| ... | | | | |

### Semantics for a Behavior

Table 6 shows multi-user semantics at the behavior level of a behavior object as defined in MPEG-SD. The "multiUsers" parameter allows the content creator to specify interactions that involve multiple users.

**Table 6.**

| **Name** | **Type** | **Usage** | **Default** | **Description** |
|---|---|---|---|---|
| triggers | array | M | | Indices of the triggers in the triggers array considered for this behavior |
| actions | array | M | | Indices of the actions in the actions array considered for this behavior. |
| multiUsers | object | O | N/A | Additional parameters to address a behavior involving multiple users. See Table 3 for the details of this object. |
| triggersCombinationControl | string | M | | |
| triggersActivationControl | enumeration | M | | |
| actionsControl | enumeration | M | | |
| interruptAction | number | O | N/A | |
| priority | number | O | 0 | |

The details of a behavior level "multiUsers"object are shown in Table 7.

**Table 7.**

| **Name** | **Type** | **Usage** | **Default** | **Description** |
|---|---|---|---|---|
| multiTriggers | array | M | | Indices of the triggers in the behavior's triggers array impacted by this parameter. |
| multiCondition | enumeration | O | ALL | If ALL, the trigger's condition must be met by all the users. |
| | | | | If ONLYN, the trigger's condition must be met by exactly N users. |
| | | | | If ATLEASTN, the trigger's condition must be met by at least N users. |
| duration | number | O | 2 | Give a time duration, in second. |
| | | | | After the trigger condition is met by a first user, it specifies a time window during which the *multiCondition* must be met. The *multiCondition* must be met during all the time window. Alternatively, the *multiCondition* must be met at least once during the time window. |
| | | | | In a first variant, during this time window, when the trigger condition has been met a first time for a user, it is still met for this user without any further check until the end of the window. In a second variant, the condition for each user is check during all the time window. |
| number | number | O | 1 | Give the number of users when condition is ONLYN or ATLEASTN. |

### Examples

Code Listing 1 shows an example glTF description file, which specifies multiUsers parameters at the trigger level for two example triggers. For the first example, a "USER_INPUT" trigger (type = 2) is used to detect if all users point with their left hand at the object described in node 0. For the second example, a "TRIGGER_VISIBILITY" trigger (type = 3) is used to detect if the objects described in nodes 1 and 2 are within the viewpoint of at least 3 users.

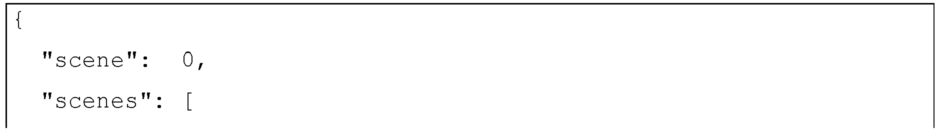

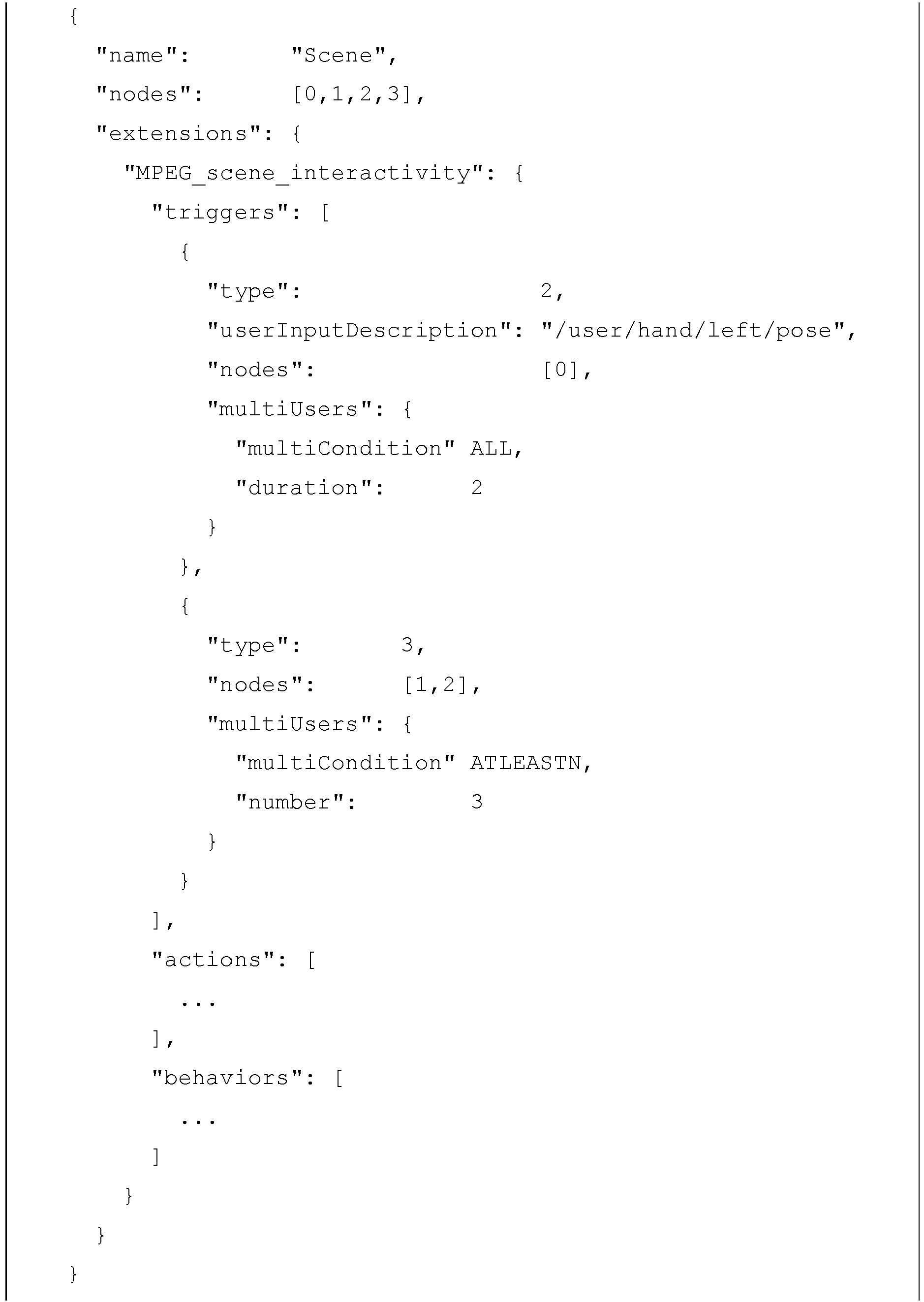

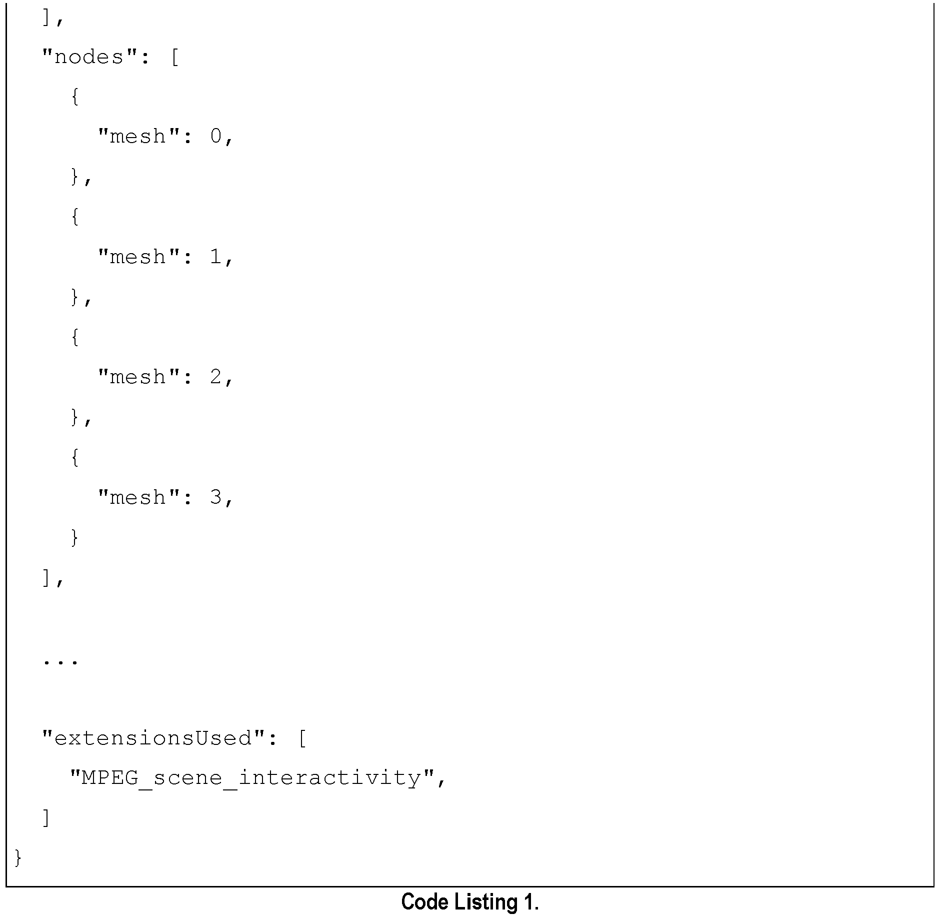

In an application that implements an XR experience, a centralized scene manager (SM, e.g. in a User Equipment or Application Server device) may handle a multi-user interaction. The SM collects information (user input, pose, actions...) from the connected users and takes actions accordingly.

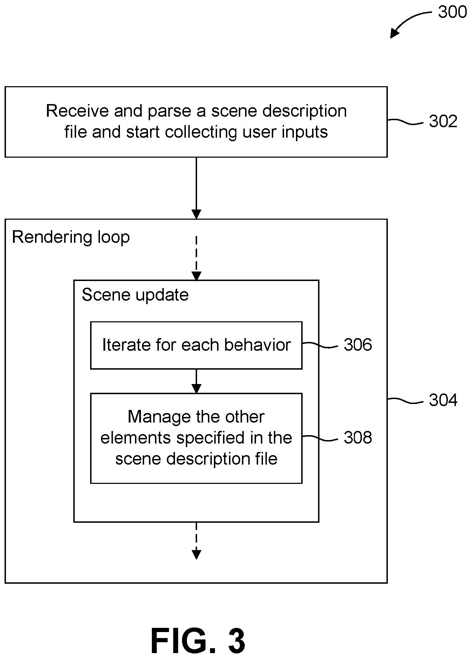

FIG. 3 is a process diagram illustrating an example processing of a scene description according to some embodiments. FIG. 3 illustrates an example process 300 for processing of a scene description file with interactivity features. After receiving 302 a scene description file, the application parses the file and starts collecting information from all the connected users (e.g., user input, pose, among others).

The application then enters the rendering loop 304 which include a scene update phase performed by the SM, that processes the scene interactivity by iterating 306 over the behaviors and managing 308 the other elements of the scene description (e.g., animation, lighting, physics, among others).

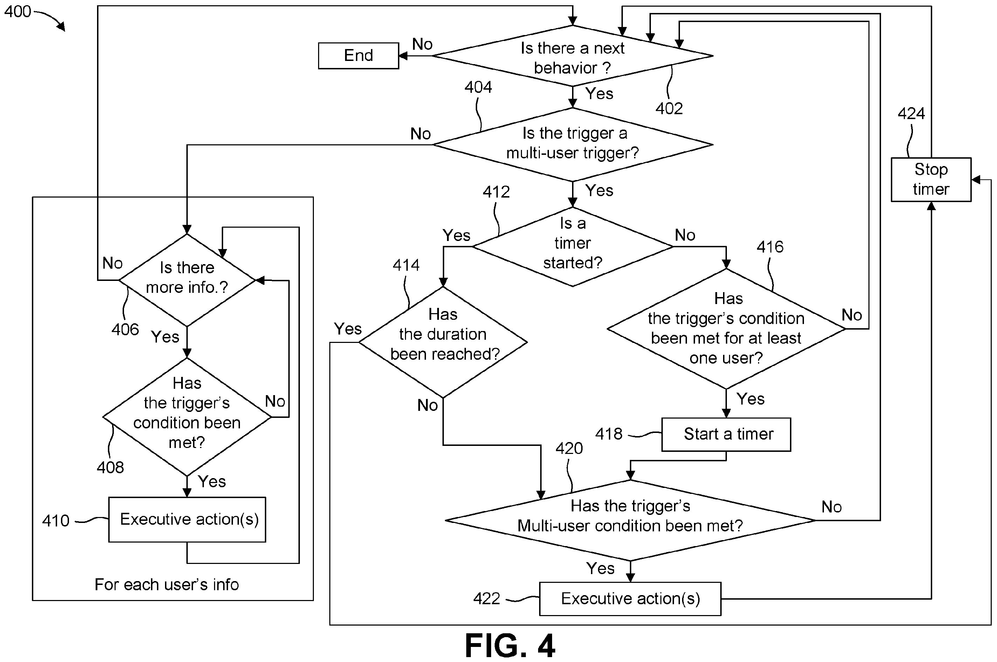

FIG. 4 is a flowchart illustrating an example muti-user trigger processing according to some embodiments. FIG. 4 shows an example process 400 that details the iterations on the behaviors. For clarity purposes, each behavior is assumed to reference only one trigger, and the triggers are assumed to be related to users.

During the processing of the scene interactivity, for each behavior and each trigger referenced in a behavior a check 402 is performed to see if there is another behavior to parse. If no, the process 400 exits. If yes, the process 400 checks 404 if the trigger involves multiple users by checking to see if a *multiUsers* parameter is specified in the trigger's description.

If the trigger is for one user, then a check 406 is performed of each user's information to see if there is more information. If no, then the process 400 returns to check 402 to see if there is another behavior to parse. If there is more information, then a check 408 is performed to see if the trigger's condition has been met. If the trigger's condition has not been met, then the check 406 is performed again to see if there is more information. If the trigger's condition has been met, then the process 400 executes 410 the actions referenced in the behavior and returns to check 406 to see if there is more information.

If the trigger is for multiple users, then a check 412 is performed to see if a timer is started. A timer may be used to handle the *mulfiUsers.duration* parameter.

If a timer is not started for this trigger, a check 416 is performed to see if the trigger's condition has been met for at least one user. For some embodiments, a check is performed on the *multiUsers.multiCondition parameter.* For some embodiments, the multiUsers.multiCondition parameter must be met during the whole duration of the timer. If no, the process 400 returns to check 402 and see if there is another behavior to parse. If the trigger's condition has been met for at least one user, then a timer is reset and started 418, and the process continues with the next check 420.

If a timer is started for this trigger, a check 414 is performed to see if the timer has reached the *multiUsers.durafion* value. If yes, the timer is stopped 424, and the process 400 returns to check 402 and see if there is another behavior to parse. If the timer has not reached the multiUsers.duration value, then a check 420 is performed to see if the trigger's multi-user condition has been met by checking to see if the *multiUsers.multiCondition* parameter is met. Depending on the variant for the *multiUsers.duration* parameter (cf. Table 4**Table 1.**), the process 400 considers the conditions that have been already met since the starting of the timer (variant 1) or not (variant 2). If the *multiUsers.multiCondition* parameter is met, the process 400 executes 422 the actions referenced in the behavior, stops 424 the timer, and returns to check 402 and see if there is another behavior to parse. If the *multiUsers.multiCondition* parameter is not met, the process 400 returns to check 402 and see if there is another behavior to parse. Alternatively, If the *multiUsers.multiCondition* parameter is not met, the timer is first stopped 424.

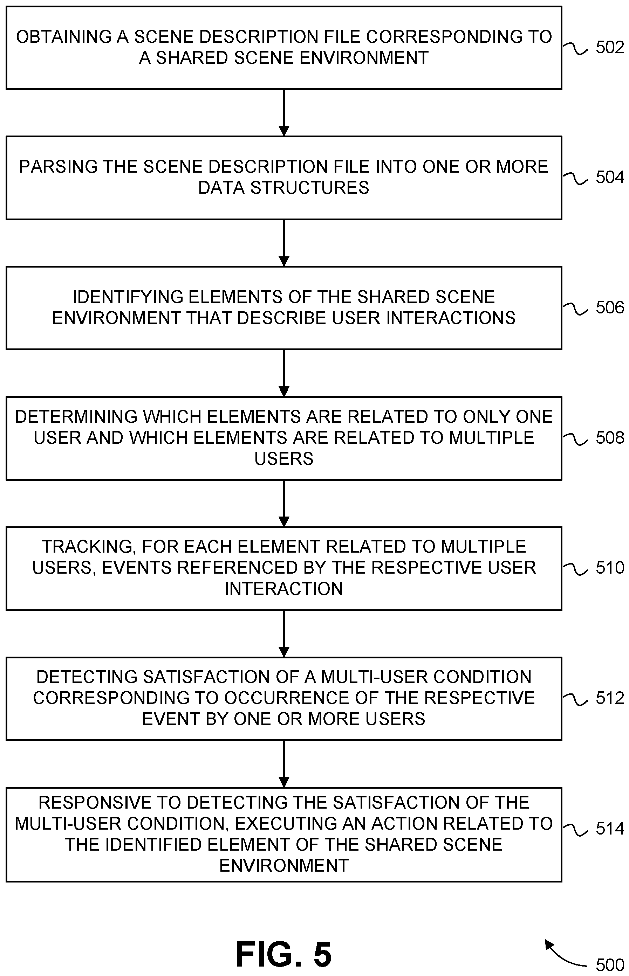

FIG. 5 is a flowchart illustrating an example process for handling multi-user triggers according to some embodiments. For some embodiments, an example process 500 may include obtaining 502 a scene description file corresponding to a shared scene environment. For some embodiments, the example process 500 may further include parsing 504 the scene description file into one or more data structures. For some embodiments, the example process 500 may further include identifying 506 elements of the shared scene environment that describe user interactions. For some embodiments, the example process 500 may further include determining 508 which elements are related to only one user and which elements are related to multiple users. For some embodiments, the example process 500 may further include tracking 510, for each element related to multiple users, events referenced by the respective user interaction. For some embodiments, the example process 500 may further include detecting 512 satisfaction of a multi-user condition corresponding to occurrence of the respective event by one or more users. For some embodiments, the example process 500 may further include responsive to detecting the satisfaction of the multi-user condition, executing 514 an action related to the identified element of the shared scene environment.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a scene description file corresponding to a shared scene environment; parsing the scene description file into one or more data structures; identifying elements of the shared scene environment that describe user interactions; determining which elements are related to only one user and which elements are related to multiple users; tracking, for each element related to multiple users, events referenced by the respective user interaction; detecting satisfaction of a multi-user condition corresponding to occurrence of the respective event by one or more users; and responsive to detecting the satisfaction of the multi-user condition, executing an action related to the identified element of the shared scene environment.

Some embodiments of the example method may further include responsive to detecting the satisfaction of the multi-user condition, executing a second action related to the identified element of the shared scene environment.

Some embodiments of the example method may further include responsive to detecting the satisfaction of the multi-user condition, executing a second action related to a second element of the shared scene environment.

Some embodiments of the example method may further include responsive to detecting the satisfaction of the multi-user condition, executing an action related to a second element of the shared scene environment, wherein the second element is different than the element identified first.

Some embodiments of the example method may further include: detecting satisfaction of a second multi-user condition corresponding to the tracked event; and responsive to detecting the satisfaction of the second multi-user condition, executing the action related to the identified element of the shared scene environment.

For some embodiments of the example method, detecting satisfaction of the multi-user condition corresponding to the tracked event includes: detecting satisfaction of the multi-user condition by a first user; and detecting satisfaction of the multi-user condition by a second user.

For some embodiments of the example method, detecting satisfaction of the multi-user condition corresponding to the tracked event includes: detecting satisfaction of the multi-user condition by a first user; starting a timer; determining the timer is less than a timeout value; and responsive to determining the timer is less than the timeout value, detecting satisfaction of the multi-user condition by a second user.

Some embodiments of the example method may further include responsive to determining the timer is less than the timeout value, detecting a second time satisfaction of the multi-user condition by the first user.

For some embodiments of the example method, detecting satisfaction of the multi-user condition corresponding to the tracked event includes detecting satisfaction of the multi-user condition by at least N users, and N is a configurable number.

For some embodiments of the example method, detecting satisfaction of the multi-user condition corresponding to the tracked event includes detecting satisfaction of the multi-user condition by only N users, and N is a configurable number.

For some embodiments of the example method, detecting satisfaction of the multi-user condition corresponding to the tracked event includes detecting satisfaction of the multi-user condition by all users of a group of users.

For some embodiments of the example method, tracking the event includes obtaining user inputs from two or more users.

For some embodiments of the example method, the multi-user condition or the second multi-user condition are either a user input trigger or a visibility trigger.

For some embodiments of the example method, the scene description file complies with a Motion Picture Experts Group-Scene Description (MPEG-SD)-based specification.

An example apparatus in accordance with some embodiments may include: a processor; and a memory storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a scene description file corresponding to a shared scene environment;
parsing the scene description file into one or more data structures;
identifying elements of the shared scene environment that describe user interactions;
determining which elements are related to only one user and which elements are related to multiple users;
tracking, for each element related to multiple users, events referenced by the respective user interaction;
detecting satisfaction of a multi-user condition corresponding to occurrence of the respective event by one or more users; and
responsive to detecting the satisfaction of the multi-user condition, executing an action related to the identified element of the shared scene environment.

2. The method of claim 1, further comprising responsive to detecting the satisfaction of the multi-user condition, executing a second action related to the identified element of the shared scene environment.

3. The method of claim 1, further comprising responsive to detecting the satisfaction of the multi-user condition, executing a second action related to a second element of the shared scene environment.

4. The method of any one of claims 1-3, further comprising:
responsive to detecting the satisfaction of the multi-user condition, executing an action related to a second element of the shared scene environment,
wherein the second element is different than the element identified first.

5. The method of any one of claims 1-4, further comprising:
detecting satisfaction of a second multi-user condition corresponding to the tracked event; and
responsive to detecting the satisfaction of the second multi-user condition, executing the action related to the identified element of the shared scene environment.

6. The method of any one of claims 1-5, wherein detecting satisfaction of the multi-user condition corresponding to the tracked event comprises:
detecting satisfaction of the multi-user condition by a first user; and
detecting satisfaction of the multi-user condition by a second user.

7. The method of any one of claims 1-6, wherein detecting satisfaction of the multi-user condition corresponding to the tracked event comprises:
detecting satisfaction of the multi-user condition by a first user;
starting a timer;
determining the timer is less than a timeout value; and
responsive to determining the timer is less than the timeout value, detecting satisfaction of the multi-user condition by a second user.

8. The method of claim 7, further comprising:
responsive to determining the timer is less than the timeout value, detecting a second time satisfaction of the multi-user condition by the first user.

9. The method of any one of claims 1-8,
wherein detecting satisfaction of the multi-user condition corresponding to the tracked event comprises detecting satisfaction of the multi-user condition by at least N users, and
wherein N is a configurable number.

10. The method of any one of claims 1-8,
wherein detecting satisfaction of the multi-user condition corresponding to the tracked event comprises detecting satisfaction of the multi-user condition by only N users, and
wherein N is a configurable number.

11. The method of any one of claims 1-8,
wherein detecting satisfaction of the multi-user condition corresponding to the tracked event comprises detecting satisfaction of the multi-user condition by all users of a group of users.

12. The method of any one of claims 1-11, wherein tracking the event comprises obtaining user inputs from two or more users.

13. The method of any one of claims 1-12, wherein the multi-user condition or the second multi-user condition are either a user input trigger or a visibility trigger.

14. The method of any one of claims 1-13, wherein the scene description file complies with a Motion Picture Experts Group-Scene Description (MPEG-SD)-based specification.

15. An apparatus comprising:
a processor; and
a memory storing instructions operative, when executed by the processor, to cause the apparatus to perform the method of any one of claims 1 through 14.
